# EUROPÄISCHE PATENTSCHRIFT

(11) **EP 3 289 942 B1**
(45) Veröffentlichungstag und Bekanntmachung des Hinweises auf die Patenterteilung: **24.04.2019**
(21) Anmeldenummer: 17185915.0
(22) Anmeldetag: 11.08.2017
(51) Int. Cl.: A47J 43/07

(54) **KÜCHENGERÄT, INSBESONDERE STANDMIXER, MIT ANGESPRITZTEM ABSTELLMITTEL**
KITCHEN APPLIANCE, IN PARTICULAR STAND MIXER, WITH MOULDED-ON SHUT-DOWN MEANS
MATÉRIEL DE CUISINE, EN PARTICULIER BLENDER, DOTÉ DU MOYEN D'ARRÊT MOULÉ PAR INJECTION

(30) Priorität: 31.08.2016 DE 102016216406
(43) Veröffentlichungstag der Anmeldung: 07.03.2018
(73) Patentinhaber: BSH Hausgeräte GmbH, 81739 München (DE)
(72) Erfinder: Stergar, David, 3342 Gornji, Grad (SI); Krüger, Tobias, 80639 München (DE); Leng, Sascha, 80339 München (DE)

(56) Entgegenhaltungen:
- WO-A1-2014/128509
- US-A- 5 957 723
- US-A1- 2002 009 016
- US-A1- 2015 305 564

## Beschreibung

### Hintergrund der Erfindung

Die vorliegende Erfindung betrifft Küchengerät, insbesondere Standmixer oder Blender mit einem Hauptkörper, in welchem ein Elektromotor zum Antreiben des Küchengeräts angeordnet ist, und einem Abstellbereich zum Abstellen auf einer Arbeitsfläche.

### Stand der Technik

Ein Standmixer oder einfach Mixer oder Blender sind elektrisch betriebene Küchengeräte zur Mischung flüssiger bzw. halbfester Zutaten oder zum Pürieren von Speisen. Im Gegensatz zu für vergleichbare Zwecke eingesetzten Pürierstäben handelt es sich um Standgeräte. Der amerikanische Begriff ist Blender.

Ein Standmixer besteht üblicherweise aus zwei Hauptteilen. Der Hauptkörper enthält einen meist für mehrere Betriebsgeschwindigkeiten schaltbaren bzw. steuerbaren Elektromotor. Darauf sitzt ein abgeschlossener Behälter aus Edelstahl, Glas oder transparentem Kunststoff. Am Grund des Behälters befindet sich ein je nach Bauart zu Reinigungszwecken eventuell herausnehmbarer Messerstern, der mittels Kupplung durch den Elektromotor in schnelle Rotation versetzt wird, solcherart die Zutaten zerkleinernd und mischend, emulgierend oder suspendierend. US2015/0305564 offenbart ein solches Küchengerät.

Diese Geräte werden meist mit hohen Rotationsgeschwindigkeiten betrieben, welches zu Überhitzungen und/oder mechanischen Instabilitäten führen kann.

### Der Erfindung zugrundeliegende Aufgabe

Es ist daher Aufgabe der vorliegenden Erfindung ein Küchengerät bereitzustellen, welches einen sicheren Betrieb bereitstellt.

### Erfindungsgemäße Lösung

Die Lösung der gestellten Aufgabe gelingt durch ein Küchengerät gemäß der Merkmalskombination des Anspruchs 1. Vorteilhafte Aus- und Weiterbildungen, welche einzeln oder in Kombination miteinander eingesetzt werden können, sind Gegenstand der abhängigen Ansprüche.

Es wird ein Küchengerät, insbesondere Standmixer oder Blender, mit einem Hauptkörper bereitgestellt. Im Hauptkörper ist ein Elektromotor zum Antreiben des Küchengeräts angeordnet. Der Hauptkörper weist einen Abstellbereich zum Abstellen auf eine Arbeitsfläche auf. Gemäß der vorliegenden Erfindung weist der Abstellbereich des Hauptkörpers angespritzte Abstellmittel auf. Folglich kann eine einfache Herstellung in einem 2K-Spritzgußverfahren bereitgestellt werden.

Gemäß der vorliegenden Erfindung stellt das angespritzte Abstellmittel eine strömungstechnische Trennung der Lufteinlässe von den Luftauslässen bereitstellen. Demnach kann das Abstellmittel zwei Funktionen zuverlässig erfüllen, erstens wird ein sicherer Stand des Geräts im Betrieb gewährleistet und zweitens kann eine strömungstechnische Umlenkung der Luftzirkulation zur Kühlung des Antriebsmotors gewährleistet werden.

Gemäß der vorliegenden Erfindung weist der Abstellbereich konzentrisch angeordnete Lüftungsschlitze auf, entlang welcher zumindest teilweise die Abstellmittel länglich angespritzt sind. Somit kann eine effektive Luftzirkulation gewährleistet werden.

Gemäß der vorliegenden Erfindung weist das angespritzte Abstellmittel eine umlaufende linienförmige Kontur auf. Somit kann ein ansprechendes Äußeres des Küchengeräts gewährleistet werden und gleichzeitig eine einfache Herstellung in einem 2K-Spritzgußverfahren implementiert werden.

*Das Abstellmittel kann sich linienförmig senkrecht auf die Hauptebene des Abstellbereichs erstrecken. Somit kann ein sicherer Stand während der Benutzung des Küchengeräts gesichert sein. Die nach Art einer Dichtlippe verlaufende Kontur des Abstellmittels stellt somit auch eine effektive Luftzirkulation bei der Kühlung des Antriebmotors bereit.*

*Es ist bevorzugt, dass in der senkrechten Ebene des Abstellmittels Aussparungen vorgesehen sind. Insbesondere wenn das Abstellmittel eine in sich geschlossenen linienförmige Kontur aufweist, können die Aussparungen die Luftzirkulation zwischen Lufteinlässe und Auslässe verbessern.*

Durch die vorliegende Erfindung kann eine kostengünstige Möglichkeit zur Implementierung eines Abstellmittels bereitgestellt werden, welches neben einem sicheren Stand bei der Benutzung des Küchengeräts, auch eine effektive Trennung der Lüftungsströme bei der Kühlung des Elektromotors bereitstellt. Weiter durch das 2K-Anspritzverfahren kann auf Schieberwerkzeuge verzichtet werden.

### Kurzbeschreibung der Zeichnungen

Weitere vorteilhafte Ausgestaltungen werden nachfolgend an Hand eines in der Zeichnung dargestellten Ausführungsbeispieles, auf welches die Erfindung jedoch nicht beschränkt ist, näher beschrieben.

Es zeigen schematisch:
- Fig. 1: ein Küchengerät gemäß der vorliegenden Erfindung; und
- Fig. 2: den Abstellbereich des Küchengeräts aus Fig. 1

### Ausführliche Beschreibung anhand eines Ausführungsbeispiels

Bei der nachfolgenden Beschreibung einer bevorzugten Ausführungsform der vorliegenden Erfindung bezeichnen gleiche Bezugszeichen gleiche oder vergleichbare Komponenten.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

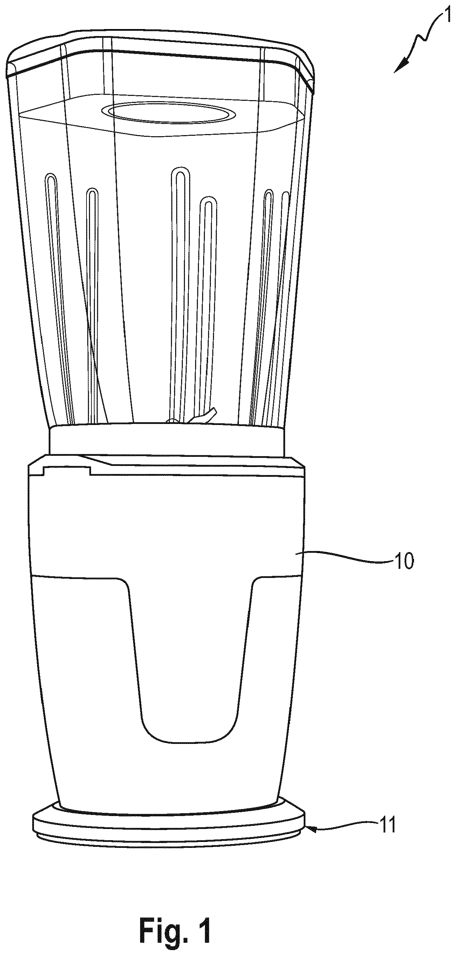

Fig. 1 zeigt einen Blender, bzw. Mini-Blender gemäß der vorliegenden Erfindung. Blender sind Standmixer welche bevorzugt zum Verarbeiten von Lebensmitteln eingesetzt werden, um beispielsweise Smoothies oder desgleichen herzustellen.

Der Blender 1 umfasst einen Hauptkörper 10, in welchem der Antriebsmotor und die Steuerung implementiert sind. Auf einer Vorderseite des Hauptkörpers 10 kann ein Breitenfeld für einen Benutzer vorgesehen werden. Auf dem Hauptkörper ist ein Verarbeitungsbehälter vorgesehen, in welchem ein Werkzeug zum Verarbeiten der Lebensmittel vom Elektromotor angetrieben wird.

Der Blender, der als Standgerät in der Küche Verwendung findet, soll mit Hilfe eines Abstellbereichs 11 am Hauptkörper 10 auf einer Arbeitsfläche betrieben werden können.

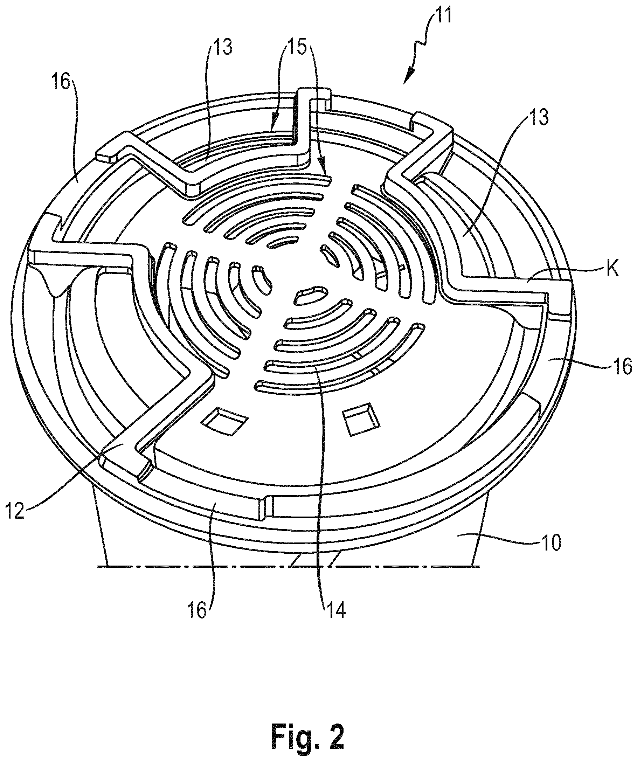

In Fig. 2 ist der Bodenbereich bzw. Abstellbereich 11 des Blenders 1 gezeigt. Zum sicheren Betrieb auf einer Arbeitsfläche weist der Abstellbereich 11 ein angespritztes Abstellmittel 12 auf, welches bevorzugt in einem 2K-Spritzgussverfahren am Hauptkörper 10 bzw. am Abstellbereich 11 in einem Herstellungsschritt angespritzt werden kann.

Das angespritzte Abstellmittel 12 weist eine linienförmige Kontur K auf, welche entlang der Lüftungsöffnungen des Abstellbereichs 11 verläuft, um so eine Trennung der Luftströme bereitstellen zu können. Somit kann eine strömungstechnische Trennung zwischen dem Lufteinlass 13 und Luftauslass 14 bereitgestellt werden. Folglich wird der Elektromotor im Hauptkörper des Blenders effektiv gekühlt und die Luftströme können einfach ohne Verwendung weiterer Umlenkmittel kontrolliert werden. In diesem Ausführungsbeispiel sind die Lufteinlässe und Luftauslässe 13, 14 als Lüftungsschlitze 15, an welchen das angespritzte Abstellmittel 12 linienförmig verläuft.

Zur besseren Luftzirkulation weist das Abtellmittel entlang seiner Kontur K Aussparungen 16 auf. Die Aussparungen 16 können somit während der Herstellung in einem 2K-Sprizugußverfahren implementiert werden.

Durch die vorliegende Erfindung kann eine kostengünstige Möglichkeit zur Implementierung eines Abstellmittels bereitgestellt werden, welches neben einem sicheren Stand bei der Benutzung des Küchengeräts auch eine effektive Trennung der Lüftungsströme bei der Kühlung des Elektromotors bereitstellt. Weiter durch das 2K-Anspritzverfahren kann auf Schieberwerkzeuge verzichtet werden.

## Patentansprüche

1. Küchengerät (1) mit einem Hauptkörper (10), in welchem ein Elektromotor zum Antreiben des Küchengeräts (1) angeordnet ist, und einem Abstellbereich (11) zum Abstellen auf einer Arbeitsfläche, wobei der Abstellbereich (11) des Hauptkörpers (10) in einem 2K-Spritzgußverfahren angespritzte Abstellmittel (12) aufweist **dadurch gekennzeichnet, dass** der Abstellbereich (11) konzentrisch angeordnete Lüftungsschlitze (15) aufweist, entlang welcher zumindest teilweise die Abstellmittel (12) länglich angespritzt sind, wobei die angespritzten Abstellmittel (12) eine umlaufende linienförmige Kontur (K) aufweisen, um eine strömungstechnische Trennung der Lufteinlässe von den Luftauslässen (13, 14) bereitzustellen.

2. Küchengerät nach Anspruch 1 **dadurch gekennzeichnet, dass** das Abstellmittel (12) sich linienförmig senkrecht auf die Hauptebene des Abstellbereichs (11) erstreckt.

3. Küchengerät nach Anspruch 2 **dadurch gekennzeichnet, dass** in der senkrechten Ebene des Abstellmittels (12) Aussparungen (16) vorgesehen sind.

## Claims

1. Kitchen appliance (1) having a main body (10), in which an electric motor for driving the kitchen appliance (1) is arranged, and a set-down region (11) for setting down on a work surface, wherein the set-down region (11) of the main body (10) has set-down means (12) moulded on in a 2C injection moulding procedure, **characterised in that** the set-down region (11) has concentrically arranged ventilation slots (15), along which at least partially the set-down means (12) are moulded on in an elongated manner, wherein the moulded-on set-down means (12) have a circumferential linear contour (K), in order to provide a fluidic separation of the air inlets from the air outlets (13, 14).

2. Kitchen appliance according to claim 1, **characterised in that** the set-down means (12) extend linearly perpendicularly onto the main plain of the set-down region (11).

3. Kitchen appliance according to claim 2, **characterised in that** recesses (16) are provided in the perpendicular plane of the set-down means (12).

## Revendications

1. Appareil de cuisine (1) avec un corps principal (10), dans lequel se trouve un moteur électrique pour l'entraînement de l'appareil de cuisine (1) et avec un lieu de pose (11) pour la pose sur une surface de travail, ce lieu de pose (11) du corps principal (10) présente des moyens de pose (12) moulés par injection 2K, **caractérisé en ce que** ce lieu de pose (11) présente des fentes d'aération (15) disposées de manière concentrique, le long desquelles les moyens de pose (12), au moins en partie, sont injectées longitudinalement, ces moyens de pose (12) injectés présentant un contour linéaire circulaire (K) pour procurer une séparation technique entre les flux d'entrées d'air et de sorties d'air (13, 14).

2. Appareil de cuisine selon la revendication 1, **caractérisé en ce que** le moyen de pose (12) s'étend linéairement à la verticale sur le plan principal du lieu de pose (11).

3. Appareil de cuisine selon la revendication 2, **caractérisé en ce que** des évidements (16) sont prévus dans le plan vertical du moyen de pose (12).
